Europäisches Patentamt

European Patent Office

Office européen des brevets

(19)

(11) Veröffentlichungsnummer : **0 453 646 B1**

(12)
# EUROPÄISCHE PATENTSCHRIFT

(45) Veröffentlichungstag der Patentschrift :
**11.08.93 Patentblatt 93/32**

(51) Int. Cl.$^5$ : **C02F 1/32, C02F 1/72**

(21) Anmeldenummer : **90123789.1**

(22) Anmeldetag : **11.12.90**

(54) **Verfahren zum Abbau von in einer Flüssigkeit enthaltenen Schadstoffen.**

(30) Priorität : **28.02.90 DE 4006234**

(43) Veröffentlichungstag der Anmeldung :
**30.10.91 Patentblatt 91/44**

(45) Bekanntmachung des Hinweises auf die
Patenterteilung :
**11.08.93 Patentblatt 93/32**

(84) Benannte Vertragsstaaten :
**AT CH DE IT LI SE**

(56) Entgegenhaltungen :
**DE-A- 3 501 528
DE-A- 3 843 679
US-A- 4 512 900**

(56) Entgegenhaltungen :
**US-A- 4 792 407
PATENT ABSTRACTS OF JAPAN vol. 12, no.
148 (C-493)(2995) 7. Mai 1988 & JP-A-62 262
792 ( IWASAKI ELECTRIC CO LTD. )**

(73) Patentinhaber : **GOEMA DR. GÖTZELMANN
PHYSIKALISCH-CHEMISCHE
PROZESSTECHNIK GmbH
Steinbeisstrasse 41
W-7143 Vaihingen/Enz (DE)**

(72) Erfinder : **Götzelmann, Wilhelm, Dr.-Ing.
Birkenwaldstrasse 90
W-7000 Stuttgart 1 (DE)**

(74) Vertreter : **Döring, Roger, Dipl.-Ing.
Weidenkamp 2
W-3012 Langenhagen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Abbau von in einer Flüssigkeit enthaltenen Schadstoffen, mit welchem der Flüssigkeit Wasserstoffperoxid zugegeben wird und mit welchem die Flüssigkeit danach durch mindestens einen Reaktor geführt wird, in welchem sie einer kurzwelligen elektromagnetischen Strahlung ausgesetzt wird (DE-A 35 01 528).

Mit diesem Verfahren zu behandelnde "Flüssigkeiten" sollen Wässer oder Abwässer sein, in denen Schadstoffe gelöst sind, die mit üblichen Verfahren gar nicht oder nur sehr schwer bzw. äußerst langsam zu entfernen sind. Zu diesen Schadstoffen gehört beispielsweise die große Gruppe der halogenierten Kohlenwasserstoffe, insbesondere Trichlorethen und Tetrachlorethen. Schadstoffe sind auch alle schwer oxidierbaren, CSB verursachenden Stoffe, die organischen Chelatbildner, wie EDTA, NTA und deren Schwermetallverbindungen, sowie die anorganischen Durchdringungskomplexe, wie beispielsweise Hexacyanoferrat.

Bei der früher weitverbreiteten Anwendung von Chlor als Oxidationsmittel zum Abbau von Schadstoffen bilden sich nach neueren Erkenntnissen chlorierte, unter Umständen ultragiftige Produkte, die toxischer sind, als die zu beseitigenden Schadstoffe. Aus diesen Gründen werden bei bekannten Verfahren an Stelle von Chlor sauerstoffhaltige Oxidationsmittel, z. B. Wasserstoffperoxid, verwendet, weil hierbei die Bildung von chlorierten Kohlenwasserstoffen nicht stattfinden kann. Derartige Verfahren gehen beispielsweise aus der US-A 3,617,582 und aus der US-A 3,617,567 hervor. Nachteilig beim Einsatz von Wasserstoffperoxid ist jedoch, daß das Oxidationspotential dieser Verbindung für viele Anwendungsfälle nicht ausreicht, oder daß die Reaktionsgeschwindigkeit viel zu klein ist.

Durch die eingangs erwähnte DE-A 35 01 528 ist es bekannt, daß sich sowohl das Oxidationsvermögen des Wasserstoffperoxids, als auch dessen Umsetzungsgeschwindigkeit durch Einstrahlung von ultraviolettem Licht erheblich vergrößern lassen. Dieser Effekt beruht auf der Bildung sehr reaktionsfähiger Radikale, deren Oxidationspotentiale die des Ozons noch übertreffen. Mit diesem bekannten Verfahren ist der Abbau der Schadstoffe in Flüssigkeiten, insbesondere in Abwässern, erheblich verbessert worden. Von Bedeutung für dieses Verfahren ist eine stets richtig dosierte Menge an Wasserstoffperoxid, da eine Fehldosierung zur Bildung von hochtoxischen Substanzen führen kann. Die ausreichende Menge an Wasserstoffperoxid ist auch deswegen erforderlich, weil das Wasserstoffperoxid wegen seiner Eigenabsorption die Energie der UV-Strahlung schwächen kann und weil eine Zersetzung des Wasserstoffperoxids unter dem Einfluß der Strahlung möglich ist. Dieser Druckschrift ist nur der Hinweis zu entnehmen, daß für die Durchführung des Verfahrens ein von der Art der zerstörenden Substanz, von der zur Verfügung stehenden Reaktionszeit und von der Strahlungsleistung des UV-Strahlers abhängiger Überschuß an Wasserstoffperoxid anzuwenden ist. Angaben darüber, wie dieser Überschuß erhalten wird, sind in der Druckschrift nicht gemacht.

Der Erfindung liegt die Aufgabe zugrunde, ein Verfahren anzugeben, mit dem die bei der Behandlung von schadstoffhaltigen Flüssigkeiten benötigte Menge an Wasserstoffperoxid auf einfache Weise in engen Grenzen eingehalten werden kann.

Diese Aufgabe wird mit einem Verfahren der eingangs geschilderten Art gemäß der Erfindung dadurch gelöst,

- daß der behandelten Flüssigkeit nach dem Verlassen des Reaktors ein erster Teilstrom entnommen wird, der mit einem zweiten, eine durch das Wasserstoffperoxid reduzierbare Reagenzlösung enthaltenden Teilstrom zusammengeführt wird,
- daß das Umschlagpotential des durch Reaktion des Wasserstoffperoxids mit dem in der Reagenzlösung enthaltenen Stoff erhaltenen Gemisches gemessen wird und
- daß die Menge des der unbehandelten Flüssigkeit zuzuführenden Wasserstoffperoxids nach Maßgabe des gemessenen Umschlagpotentials derart geregelt wird, daß zu jedem Zeitpunkt des Reaktionsablaufs der dafür erforderliche, über das stöchiometrische Verhältnis hinausgehende Überschuß an Wasserstoffperoxid in der dem Reaktor zugeführten Flüssigkeit vorhanden ist.

Dieses Verfahren gestattet auf einfache Weise die Erfassung des Gehalts an Wasserstoffperoxid in der behandelten Flüssigkeit, so daß mittels eines Reglers ständig der erforderliche Überschuß an Wasserstoffperoxid eingestellt werden kann. Erreicht wird das durch den Einsatz der Reagenzlösung, die selbst ein gut meßbares Redoxpotential hat und die einen Stoff enthält, mit dem das Wasserstoffperoxid reagieren kann. Ein solcher Stoff ist beispielsweise Kaliumpermanganat. Es kann aber grundsätzlich jedes Oxidationsmittel eingesetzt werden, dessen Normalpotential größer als das von Wasserstoffperoxid ist. Mit diesem Verfahren ergibt sich die Gehaltsbestimmung für das Wasserstoffperoxid in der behandelten Flüssigkeit aus dem Titer der Reagenzlösung und dem Verhältnis der beiden Teilströme - Flüssigkeit einerseits und Reagenzlösung andererseits - unter Berücksichtigung der Redoxgleichung zwischen Wasserstoffperoxid und dem Stoff der Reagenzlösung. Durch Veränderung der beiden Teilströme läßt sich der Wasserstoffperoxidüberschuß, mit dem Umschlagpotential als Führungsgröße, über die dosierende Pumpe für das Wasserstoffperoxid beliebig verstellen. Fehldosierungen und die Bildung von u. U. hochtoxischen Substanzen sind bei Einsatz dieses Verfahrens nicht mehr möglich.

Weitere vorteilhafte Ausgestaltungen der Erfindung gehen aus den Unteransprüchen hervor.

Das Verfahren nach der Erfindung wird anhand der Zeichnungen als Ausführungsbeispiel erläutert.

Es zeigen:

Fig. 1 in schematischer Darstellung eine Vorrichtung zur Durchführung des Verfahrens nach der Erfindung.

Fig. 2 und 5 Kurvenverläufe für den Schadstoffabbau in Abhängigkeit von der Zeit.

Fig. 3 und 4 zwei unterschiedliche Gaschromatogramme.

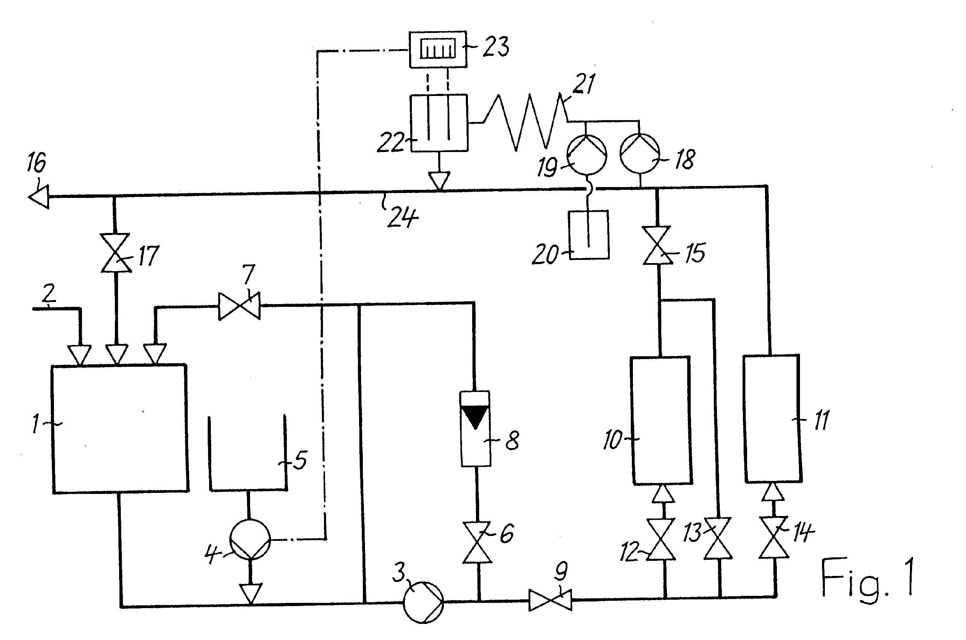

In einen Behälter 1, bei dem es sich um einen Vorrats- bzw. Umlaufbehälter handeln kann, wird über eine Leitung 2 eine zu behandelnde, Schadstoffe enthaltende Flüssigkeit eingeleitet, die im folgenden als "Abwasser" bezeichnet wird. Das Abwasser wird mittels einer Pumpe 3 aus dem Behälter 1 herausgepumpt und durch die in Fig. 1 dargestellte Anlage geführt. Dem Abwasser wird mittels einer Pumpe 4, die als Dosierorgan dient, aus einem Vorratsbehälter 5 Wasserstoffperoxid in genau dosierter Menge hinzugegeben. Ein über Ventile 6 und 7 einschaltbarer Strömungsmesser 8 dient in Verbindung mit einem Ventil 9 zur Einstellung des Abwasserstromes, der zwei Reaktoren 10 und 11 zugeführt wird.

In den Reaktoren 10 und 11 wird das Abwasser einer kurzwelligen elektromagnetischen Strahlung ausgesetzt. Vorzugsweise sind die beiden Reaktoren 10 und 11 als Quarzglasröhren in koaxialer Anordnung ausgebildet und mit Quecksilberhochdruckbrennern ausgerüstet, so daß das Abwasser mit ultraviolettem Licht bestrahlt wird. Die beiden Reaktoren 10 und 11 können durch Betätigung der Ventile 12, 13, 14 und 15 wahlweise parallel zueinander oder hintereinander vom Abwasser durchströmt werden. Es können auch mehr als zwei Reaktoren vorhanden sein, und es ist auch möglich, daß nur einer der Reaktoren 10 oder 11 vom Abwasser durchströmt wird. Das behandelte Abwasser kann in Richtung des Pfeiles 16 abgeleitet oder über ein Ventil 17 im Kreislauf zurück zum Behälter 1 geführt werden. Die Parallelschaltung der Reaktoren 10 und 11 ist für Chargenbetrieb vorteilhaft, während die Reihenschaltung für den Durchlaufbetrieb besser geeignet ist.

Zur genau dosierten Zugabe des Wasserstoffperoxids mittels der Pumpe 4 wird dem behandelten Abwasser mittels einer Pumpe 18 ein erster Teilstrom entnommen. Diesem ersten Teilstrom wird ein zweiter Teilstrom einer Reagenzlösung zugeführt, der mittels einer Pumpe 19 einem Behälter 20 entnommen wird. Die beiden Teilströme werden einem Regler 21 und einer Meßzelle 22 zugeführt, in der das Umschlagpotential der beiden Teilströme gemessen wird. In der Meßzelle 22 ist vorzugsweise eine Anordnung von Redoxmeßketten vorhanden. Über ein an die Meßzelle 22 angeschlossenes Regelgerät 23 wird die Pumpe 4 so geregelt, daß stets ein ausreichender Überschuß an Wasserstoffperoxid im Abwasser vorhanden ist.

In der Reagenzlösung ist als Oxidationsmittel in bevorzugter Ausführungsform Kaliumpermanganat enthalten. Es können aber auch andere Oxidationsmittel eingesetzt werden, wie beispielsweise Chromat oder Persulfat. Das jeweils verwendete Oxidationsmittel muß auf jeden Fall ein Normalpotential haben, das größer als das des Wasserstoffperoxids (+ 0,68V) ist. Der Reaktionslösung, vorzugsweise also dem Kaliumpermanganat, wird zweckmäßig Säure im Überschuß hinzugegeben, um die Reaktion mit dem Wasserstoffperoxid zu beschleunigen. In bevorzugter Ausführungsform wird Schwefelsäure eingesetzt.

Für die Wirksamkeit des Verfahrens ist es außerdem erforderlich, daß im ersten Teilstrom, also in der Flüssigkeit hinter den Reaktoren 10 und 11, immer Wasserstoffperoxid vorhanden ist. Sollte das aus irgendwelchen Gründen nicht mehr der Fall sein, beispielsweise durch Unterdosierung oder zu starke Zersetzung in den Reaktoren 10 und 11, dann wird das Verfahren bzw. der Flüssigkeitsumlauf sofort abgebrochen. Das kann von der Meßzelle 22 veranlaßt werden, durch welche das Fehlen von Wasserstoffperoxid in dem zugeführten Gemisch festgestellt wird.

Die beiden Teilströme der Pumpen 18 und 19 lassen sich aufeinander abstimmen, wobei ganz bestimmte Wasserstoffperoxidüberschüsse erzeugt werden können, die sich beispielsweise durch eine besondere Programmsteuerung, auch während der Reaktion, verändern lassen. Der geringe Volumenstrom des Reaktionsgemisches für die Messung kann wieder in die Leitung 24 eingespeist werden.

Im folgenden werden drei Beispiele zum Abbau von Schadstoffen mit dem Verfahren nach der Erfindung gegeben:

1. Beispiel. Abbau von Trichlorethen

Bei der Behandlung einer Trichlorethen enthaltenden Flüssigkeit mit einem zur vollständigen Oxidation notwendigen stöchiometrischen Überschuß an Wasserstoffperoxid ohne Anwendung von ultravioletter Bestrahlung ist auch nach längerer Reaktionszeit nur ein äußerst geringer Abbau des Trichlorethens nachweisbar.

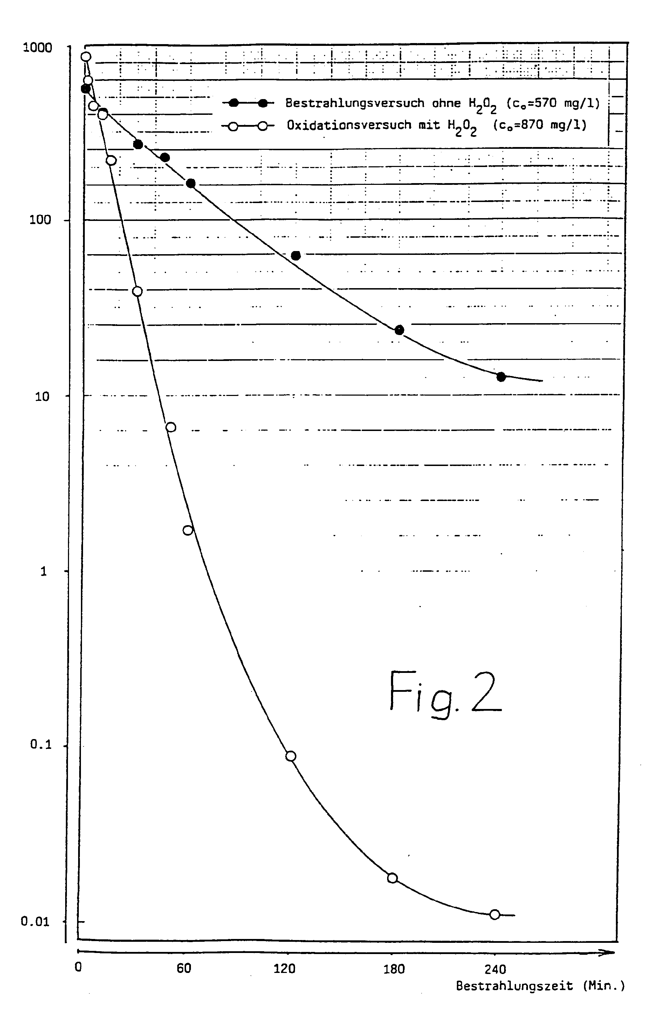

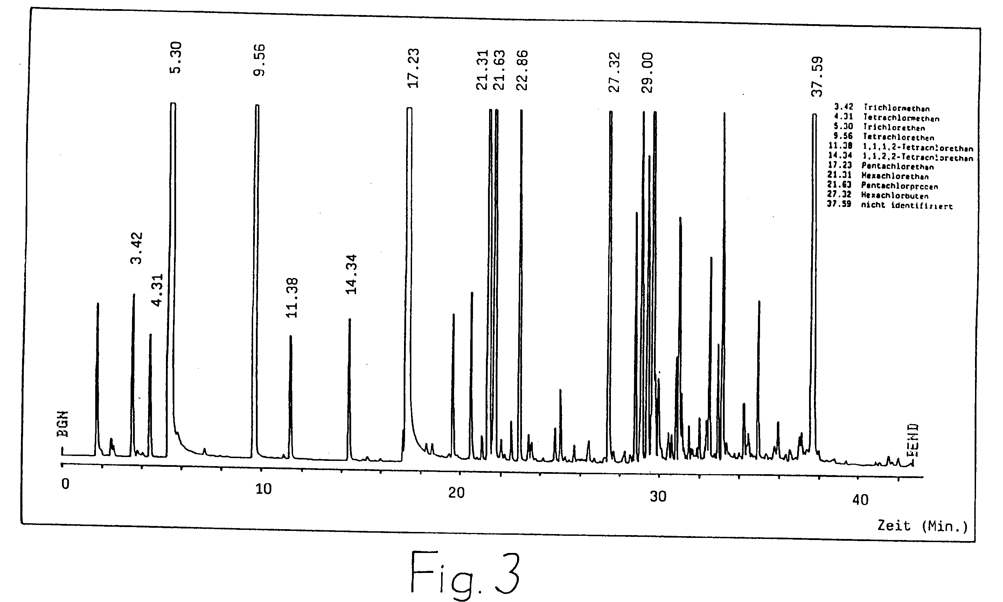

Bei alleiniger Anwendung von ultravioletter Bestrahlung wird entsprechend der oberen Kurve in Fig. 2 nur eine langsame Hydrolyse durch Veränderungen des pH-Werts und der Leitfähigkeit beobachtet. Was dabei im einzelnen passiert, geht aus dem Gaschromatogramm nach Fig. 3 hervor, das mit Hilfe eines Massendetektors aufgenommen wurde. Dabei konnten über 35 neue Chlorkohlenwasserstoffe nachgewiesen werden, darunter beispielsweise auch Pentachlorbenzol.

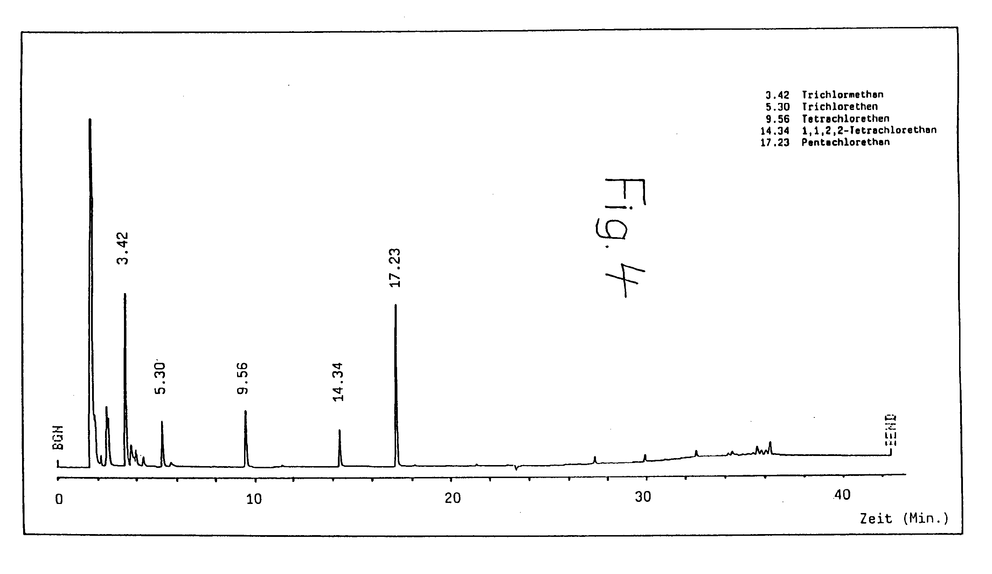

Erst die kombinierte Anwendung von Wasserstoffperoxid und UV-Licht führt entsprechend der unteren Kurve in Fig. 2 zu einem schnellen Abbau der organischen Verbindungen im Abwasser. Die Bildung höher molekularer chlorierter Kohlenwasserstoffe wird außerdem vermieden. Das zeigt das Gaschromatogramm nach Fig. 4

Aus den durchgeführten Versuchen geht hervor, daß man eine UV-Bestrahlung von Abwasser, in dem Reste von Chlorkohlenwasserstoffen oder Chloride gelöst sind, nicht ohne die Sicherstellung einer ausreichenden Wasserstoffperoxiddosierung zulassen darf, da sonst die Gefahr der Bildung von Verbindungen mit größerer Toxizität besteht, als sie im nicht behandelten Abwasser ursprünglich vorlagen. Die Bedeutung des neuen Verfahrens wird besonders durch die Erkenntnis unterstrichen, daß die infolge nicht ausreichender Dosierung von Wasserstoffperoxid bei der UV-Bestrahlung sich bildenden Zwischenprodukte sich wesentlich schwerer bzw. langsamer abbauen lassen, als die ursprünglichen Ausgangsverbindungen, was sich durch die separate Behandlung dieser Verbindungen nachweisen ließ.

## 2. Beispiel. Abbau von Hexacyanoferrat

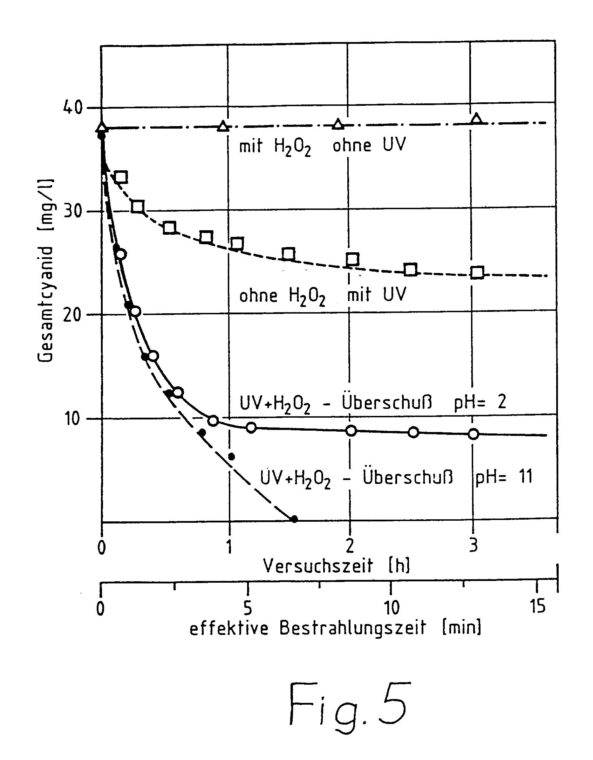

Analog zu dem beim Trichlorethen erläuterten Verfahren werden die Auswirkungen der einzelnen Maßnahmen separat und in ihrer Zusammenwirkung für die Naßoxidation von Hexacyanoferrat dargestellt. Die Ergebnisse gehen aus der Fig. 5 hervor.

Wasserstoffperoxid allein (oberste Kurve) hat im Beobachtungszeitraum keinen erkennbaren Einfluß. Die UV-Bestrahlung allein (2. Kurve von oben) bewirkt auch ohne Zugabe von Wasserstoffperoxid einen deutlichen aber für praktische Anwendungen unzureichend langsamen Abbau. Die Dissoziation der Hexacyanoferrate unter Einwirkung von ultraviolettem Licht ist bekannt.

Erst die kombinierte Einwirkung von Wasserstoffperoxid und UV-Bestrahlung, in der in Fig. 1 dargestellten Anlage, bewirkt entsprechend den beiden unteren Kurven in Fig. 5 einen großen und schnellen Abbau der Eisencyanokomplexe in sehr kurzer Zeit (6 Minuten effektive Bestrahlungszeit). Dabei sinkt das im Abwasser von 100 mg/l Hexacyanoferrat enthaltene Cyanid unter die vorgeschriebene Grenze. Die dafür in der Anlage erforderlichen Behandlungszeiten liegen bei ca. 1,5 Stunden bei dem vorgegebenen Verhältnis zwischen Reaktorvolumen und Gesamtvolumen der Anlage.

## 3. Beispiel. Abbau von Chelatkomplexen.

Als Beispiel für den Abbau von Chelatkomplexen werden die Ergebnisse der Behandlung einer Flüssigkeit von 2,2 mmol/l EDTA und 2 mmol/l Kupfersulfat in der Anlage nach Fig. 1 mit dem neuen Verfahren aufgeführt. Aus der nachfolgenden Tabelle geht der zeitliche Verlauf der oxidativen Zerstörung des Komplexbildners aus dem Verlust des Komplexbindevermögens (KBV), das in mg/l Kupfer angegeben wird, hervor.

| Reaktionszeit in Min. | effektive Bestrahlungs-Zeit in Min. | Komplexbindungs-vermögen in mg/lCu |
|---|---|---|
| 0 | 0 | 132 |
| 10 | 0,72 | 131 |
| 20 | 1,45 | 129 |
| 30 | 2,17 | 126 |
| 60 | 4.34 | 101 |
| 120 | 8,68 | 42 |
| 180 | 13,01 | 7,3 |
| 240 | 17,35 | 1,6 |
| 300 | 21.69 | 0.96 |
| 360 | 26,00 | 0,56 |

Weder das Wasserstoffperoxid noch die UV-Bestrahlung alleine bewirken einen technisch verwertbaren Abbau dieser Komplexbildner. Nur der synergistische Effekt und dessen Gewährleistung über den gesamten Reaktionsablauf führen zu einem in der Praxis einsetzbaren und die heutigen Anforderungen sicherstellenden Verfahren.

## Patentansprüche

1. Verfahren zum Abbau von in einer Flüssigkeit enthaltenen Schadstoffen, mit welchem der Flüssigkeit Wasserstoffperoxid zugegeben wird und mit welchem die Flüssigkeit danach durch mindestens einen Reaktor geführt wird, in welchem sie einer kurzwelligen elektromagnetischen Strahlung ausgesetzt wird, <u>dadurch gekennzeichnet</u>,
   - daß der behandelten Flüssigkeit nach dem Verlassen des Reaktors (10,11) ein erster Teilstrom entnommen wird, der mit einem zweiten, eine durch das Wasserstoffperoxid reduzierbare Reagenzlösung enthaltenden Teilstrom zusammengeführt wird,
   - daß das Umschlagpotential des durch Reaktion des Wasserstoffperoxids mit dem in der Reagenzlösung enthaltenen Stoff erhaltenen Gemisches gemessen wird und
   - daß die Menge des der unbehandelten Flüssigkeit zuzuführenden Wasserstoffperoxids nach Maßgabe des gemessenen Umschlagpotentials derart geregelt wird, daß zu jedem Zeitpunkt des Reaktionsablaufs der dafür erforderliche, über das stöchiometrische Verhältnis hinausgehende Überschuß an Wasserstoffperoxid in der dem Reaktor (10,11) zugeführten Flüssigkeit vorhanden ist.

2. Verfahren nach Anspruch 1, <u>dadurch gekennzeichnet</u>, daß als Stoff für die Reagenzlösung Kaliumpermanganat verwendet wird.

3. Verfahren nach Anspruch 1 oder 2, <u>dadurch gekennzeichnet</u>, daß der Reagenzlösung Säure im Überschuß zugegeben wird.

4. Verfahren nach einem der Ansprüche 1 bis 3, <u>dadurch gekennzeichnet</u>, daß mindestens zwei Reaktoren (10,11) eingesetzt werden, die wahlweise parallel zueinander oder hintereinander von der Flüssigkeit durchströmt werden.

5. Verfahren nach einem der Ansprüche 1 bis 4, <u>dadurch gekennzeichnet</u>, daß die Flüssigkeit in allen Reaktoren (10,11) mit ultraviolettem Licht bestrahlt wird.

6. Verfahren nach einem der Ansprüche 1 bis 5, <u>dadurch gekennzeichnet</u>, daß ultraviolettes Licht des C-Bereichs mit einer Wellenlänge zwischen 200 nm und 280 nm verwendet wird.

7. Verfahren nach einem der Ansprüche 1 bis 6, <u>dadurch gekennzeichnet</u>, daß die beiden Teilströme zur Einstellung verschieden großer Wasserstoffperoxidüberschüsse veränderbar sind.

8. Verfahren nach einem der Ansprüche 1 bis 7, <u>dadurch gekennzeichnet</u>, daß das Umschlagpotential in einer Meßzelle (22) gemessen wird, in der Redoxmeßketten angeordnet sind.

9. Verfahren nach einem der Ansprüche 1 bis 8, <u>dadurch gekennzeichnet</u>, daß der Flüssigkeitsumlauf sofort gestoppt wird, wenn hinter dem Reaktor (10,11) kein Wasserstoffperoxid mehr in dem ersten Teilstrom enthalten ist.

10. Verfahren nach einem der Ansprüche 1 bis 9, <u>dadurch gekennzeichnet</u>, daß zur Einstellung des erforderlichen Überschusses an Wasserstoffperoxid ein Programmregler verwendet wird.

11. Verwendung des Verfahrens nach einem der Ansprüche 1 bis 10 zum Abbau halogenierter Kohlenwasserstoffe.

12. Verwendung des Verfahrens nach einem der Ansprüche 1 bis 10 zum Abbau von Chloriden.

13. Verwendung des Verfahrens nach einem der Ansprüche 1 bis 10 zum Abbau von organischen Komplexbildnern und/oder Metallkomplexen mit diesen und/oder Durchdringungskomplexen.

**Claims**

1. A method for the decomposition of pollutants contained in a fluid, with which hydrogen peroxide is added to the fluid and with which the fluid is subsequently fed through at least one reactor in which it is exposed to a shortwave electromagnetic radiation, <u>characterised in that</u>
   - from the treated fluid after leaving the reactor (10,11) there is removed a first flow component which is brought together with a second flow component containing a reagent solution which is reducible by the hydrogen peroxide,
   - that the transition potential is measured of the mixture obtained by the reaction of the hydrogen peroxide with the substance contained in the reagent solution and
   - that the amount of the hydrogen peroxide to be added to the untreated fluid is so controlled in dependence on the measured transition potential that at any point in time of the course of the reaction there is present in the fluid supplied to the reactor (10,11) the necessary excess of hydrogen peroxide beyond the stoichiometric relationship.

2. A method according to claim 1, <u>characterised in that</u> there is used as the substance for the reagent solution potassium permanganate.

3. A method according to claim 1 or 2, <u>characterised in that</u> excess acid is added to the reagent solution.

4. A method according to any one of claims 1 to 3, <u>characterised in that</u> at least two reactors (10,11) are used, through which, as desired, the fluid may flow in parallel or in series.

5. A method according to any one of claims 1 to 4, <u>characterised in that</u> the fluid is irradiated in all reactors (10,11) with ultra-violet light.

6. A method according to any one of claims 1 to 5, <u>characterised in that</u> ultra-violet light of the C-range is used with a wavelength between 200 nm and 280 nm.

7. A method according to any one of claims 1 to 6, <u>characterised in that</u> the two flow components are variable for the adjustment of differently-sized hydrogen peroxide excesses.

8. A method according to any one of claims 1 to 7, <u>characterised in that</u> the transition potential is measured in a measurement cell (22) in which there are arranged oxidation-reduction measurement chains.

9. A method according to any one of claims 1 to 8, <u>characterised in that</u> the fluid circulation is stopped immediately when, after the reactor (10,11), hydrogen peroxide is no longer contained in the first flow component.

10. A method according to any one of claims 1 to 9, <u>characterised in that</u> a program controller is used for the adjustment of the necessary excess of hydrogen peroxide.

11. Use of the method according to any one of claims 1 to 10, for the decomposition of halogenated hydrocarbons.

12. Use of the method according to any one of claims 1 to 10, for the decomposition of chlorides.

13. Use of the method according to any one of claims 1 to 10, for the decomposition of organic complexing agents and/or metal complexes with these and/or penetration complexes.

**Revendications**

1. Procédé pour la décomposition de substances nocives contenues dans un liquide, selon lequel du péroxyde d'hydrogène est ajouté au liquide et selon lequel le liquide est ensuite guidé à travers au moins un réacteur, dans lequel il est exposé à un rayonnement électromagnétique d'ondes courtes, caractérisé en ce que,
   - après avoir quitté le réacteur (10, 11) on prélève, à partir du liquide traité, un premier courant partiel, qui vient rejoindre un deuxième courant partiel contenant une solution de réactif réductible par le péroxyde d'hydrogène,

- on mesure le potentiel de transition du mélange obtenu par réaction du péroxyde d'hydrogène avec la substance contenue dans la solution de réactif et
- on règle la quantité de péroxyde d'hydrogène à ajouter au liquide non traité après détermination du potentiel de transition mesuré, de façon qu'à chaque moment du déroulement de la réaction l'excédent nécessaire en péroxyde d'hydrogène, allant au-delà de la proportion stœchiométrique, soit présent dans le liquide envoyé au réacteur (10, 11).

2. Procédé selon la revendication 1, caractérisé en ce que du permanganate de potassium est utilisé comme substance pour la solution de réactif.

3. Procédé selon la revendication 1 ou 2, caractérisé en ce que de l'acide est ajouté en excédent à la solution de réactif.

4. Procédé selon l'une des revendications 1 à 3, caractérisé en ce qu'au moins deux réacteurs (10, 11) sont utilisés, qui sont traversés, au choix parallèlement l'un à l'autre ou l'un derrière l'autre, par le liquide.

5. Procédé selon l'une des revendications 1 à 4, caractérisé en ce que le liquide est irradié, dans tous les réacteurs (10, 11) à la lumière ultraviolette.

6. Procédé selon l'une des revendications 1 à 5, caractérisé en ce que la lumière ultraviolette de la zone C est appliquée à une longueur d'ondes de 200 nm à 280 nm.

7. Procédé selon l'une des revendications 1 à 6, caractérisé en ce que les deux courants partiels peuvent être modifiés pour le réglage d'excédents en péroxyde d'hydrogène d'ampleur différente.

8. Procédé selon l'une des revendications 1 à 7, caractérisé en ce que le potentiel de transition est mesuré dans une cellule de mesure (22), dans laquelle sont disposées des chaînes de mesure à oxydoréduction.

9. Procédé selon l'une des revendications 1 à 8, caractérisé en ce que la circulation du liquide est immédiatement stoppée, quand il n'y a plus, derrière le réacteur (10, 11), de péroxyde d'hydrogène dans le premier courant partiel.

10. Procédé selon l'une des revendications 1 à 9, caractérisé en ce qu'un régulateur à programme est utilisé pour le réglage de l'excédent nécessaire en péroxyde d'hydrogène.

11. Utilisation du procédé selon l'une des revendications 1 à 10 pour la décomposition des hydrocarbures halogénés.

12. Utilisation du procédé selon l'une des revendications 1 à 10 pour la décomposition des chlorures.

13. Utilisation du procédé selon l'une des revendications 1 à 10 pour la décomposition d'agents formant des complexes organiques et/ou de complexes métalliques avec ces et/ou complexes de pénétration.

Fig. 1

EP 0 453 646 B1

Fig. 2

Legend:
- ●——● Bestrahlungsversuch ohne $H_2O_2$ ($c_o$=570 mg/l)
- ○——○ Oxidationsversuch mit $H_2O_2$ ($c_o$=870 mg/l)

x-axis: Bestrahlungszeit (Min.)

Fig. 3

| | |
|---|---|
| 3.42 | Trichlormethan |
| 4.31 | Tetrachlormethan |
| 5.30 | Trichlorethen |
| 9.56 | Tetrachlorethen |
| 11.08 | 1.1.1.2-Tetrachlorethan |
| 14.34 | 1.1.2.2-Tetrachlorethan |
| 17.23 | Pentachlorethan |
| 21.31 | Hexachlorethan |
| 21.63 | Pentachlorpropen |
| 27.32 | Hexachlorbuten |
| 37.59 | nicht identifiziert |

Zeit (Min.)

# Fig. 4

3.42    Trichlormethan
5.30    Trichlorethen
9.56    Tetrachlorethen
14.34   1,1,2,2-Tetrachlorethan
17.23   Pentachlorethan

BGN

3.42

5.30

9.56

14.34

17.23

EEND

Zeit (Min.)

0        10        20        30        40

Fig.5